# EUROPEAN PATENT APPLICATION

(11) **EP 0 836 290 A2**
(43) Date of publication of application: **15.04.1998**
(21) Application number: 97307773.8
(22) Date of filing: 02.10.1997
(51) Int. Cl.: H04B 7/195

(54) **Satellite communication method using satellites on substantially circular orbit, inclined to the equatorial plane with period matching the earth period**

(30) Priority: 10.10.1996 US 729080
(71) Applicant: NORTHERN TELECOM LIMITED, Montreal, Quebec H2Y 3Y4 (CA)
(72) Inventor: McCaughan, Daniel Vincent, Holywood, County Down, BT18 0HA (IE); Smith, Martin Steven, Chelmsford, Essex, CM1 4XQ (GB)
(74) Representative: Ryan, John Peter William

(57) **Abstract**

A system for relaying information between a satellite in orbit around the earth, and an earth station, wherein the satellite orbit is:
a) substantially circular;
b) inclined to the equatorial plane; and
c) has a period matching the earth's rotational period; and
wherein the earth station comprises an antenna operable over a wider angle in elevation than in azimuth. By tilting the axis of the orbit, and using this type of antenna, more satellites can be fitted into the limited geostationary positions without mutual interference.

## Description

### Field of the Invention

The present invention relates to methods of relaying information by satellites, methods of transmitting information to satellites, systems for relaying information.

### Background to the Invention

It is known to place satellites in geostationary orbits for relaying information eg for telecommunication or broadcast or even remote sensing purposes. The information may be processed on board the satellite before being relayed to earth. Control signals may be passed between earth and satellite aswell as the information in the form of the useful traffic or communication payload. The advantage of a geostationary orbit is that the satellite remains approximately stationary with respect to the earth, and therefore the antenna at the earth station need not track any motion. This is particularly important for applications which require low cost transmitters or receivers, eg mobile telecommunications, or broadcast applications where audio, video or data is relayed to many receivers. In such applications, it is important to minimise the costs and often the size of the transmitting or receiving antenna at the earth station.

One disadvantage with geostationary satellites is that they must be at a fixed height above the earth, and must be above the equator. The large distance, approximately 36,000 kilometres from the earth station to the satellite, gives rise to unavoidable signal delays. Also, relatively high performance transmitting and receiving apparatus is normally required.

A further disadvantage is that for earth stations at high latitudes, the geostationary satellites appear quite low down in the sky, relatively near the horizon. This means the receiving antenna is more susceptible to noise interference, and therefore needs to be larger or more directional, increasing the cost. Furthermore, the window of longitude offset between the ground or earth station and the satellite is reduced at northern latitudes.

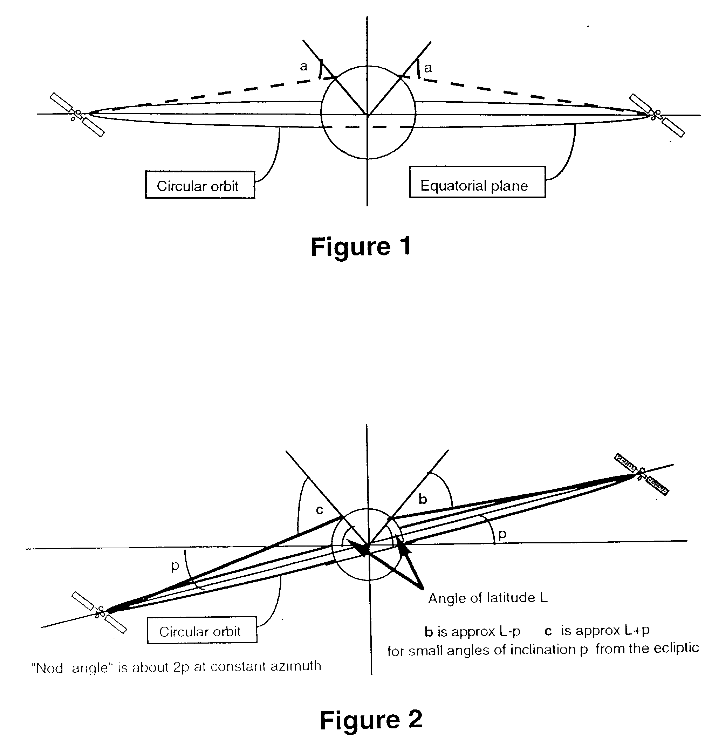

This means that geostationary slots optimised in position for major centres of population, particularly for more industrialised centres are becoming more valuable and more scarce. For applications such as television broadcasting, a typical home antenna for the earth station has a beam of 3 degrees by 3 degrees, and therefore satellites broadcasting at the same frequencies with the same polarisation need to be spaced apart by about 6° degrees. Figure 1 shows a conventional geostationary orbit from a point on the earth's surface, the satellite will appear stationary at an elevation of (90-a)°, above the horizon.

In addition, as discussed in GB 2 288 038, lateral spacing between satellites in geostationary orbits is necessary to maintain physical separation despite minor orbital variations caused by solar radiation forces, and non-linearities in the earth's gravitational field. Furthermore, separation is needed to avoid interference caused by unintentional side lobes of antennas transmitting from neighbouring satellites at similar frequencies. Satellites oscillate and move around their nominal position and must be brought back by means of on board thrusters. On board fuel for these typically gives 10 year in orbit life, but the weight of such fuel adds greatly to the launch costs.

Such separation may be of the order of tens of kilometres, or fractions of degrees. Additional separation, for example between satellites of a group provided at essentially the same point on longitude, may be provided by making the orbits slightly eccentric, or inclining the axis of the orbit slightly to give a very small north south variation in position. It is known from GB 2 288 038 to make the phase of such oscillations mutually out of phase between the satellites in the group, to assure separation. However, for the present purposes, such small amounts of relative movement of the satellites will be regarded as negligible.

It is known from US 5 120 007 to provide for substantial movement in the position of spare satellites in a north south direction, where a tilt in orbital axis of 3 to 5 degrees is discussed. However, the purpose of such an orbit is for a back up satellite to enable it to be ready to replace an operational satellite in a truly geostationary orbit if required, with a minimum of delay and minimum use of valuable fuel for the positioning thrusters. This patent specifically describes the "back up" satellite as being separate from the "operational" satellite" and makes no provision of any kind for operation in anything other than normal geosynchronous orbit.

There is no suggestion how variations in orbits or in antenna design can be used to overcome some of the drawbacks of geostationary orbits as described.

### Summary of the Invention

It is an aim of the invention to provide improved methods and systems.

According to the invention there is provided a method of operating a satellite comprising the steps of maintaining it in orbit around the earth, and using it to relay traffic, wherein the orbit is substantially circular, is inclined to the equatorial plane, and has a period matching the earth's rotational period.

By moving the satellite out of the equatorial plane, at the same nominal distance from the earth by tilting the axis of the orbital plane with regard to the polar axis, a number of advantages arise. Improved coverage can be given for particular periods in the day to northern latitudes. Interference with neighbouring satellites in geostationary orbits can be reduced, either by transmitting from the satellite only when far away from other geostationary satellites, or when far away from other satellites at the same longitude, but tilted out of the equatorial plane in different directions. Such satellites would appear to be moving in oscillatory fashion when viewed from the earth station, but with mutually different phase. The orbit of the invention also suits earth station antennas with a beam pattern with larger elevation angle than azimuth angle. If the beam pattern is 10 degrees by 1 degree, then frequencies can be reused on satellites within 1 degree in the geostationary orbit, for example. The invention also suits earth station antennas with a switched beam pattern having a main axis switched in synchronism with the satellite position.

According to another aspect of the invention there is provided a method of transmitting information from an earth station to a satellite for relaying the information to an earth receiver, wherein the satellite is in an orbit which is substantially circular, and inclined to the equatorial plane and has a period matching the earth's rotational period.

According to another aspect of the invention there is provided a system for relaying information between a satellite in orbit around the earth, and an earth station, wherein the satellite orbit is:
a) substantially circular;
b) inclined to the equatorial plane; and
c) has a period matching the earth's rotational period; and
wherein the earth station comprises an antenna operable over a wider angle in elevation than in azimuth.

According to another aspect of the invention, there is provided a system for transmitting information between a satellite and an earth station, wherein the satellite is in a geostationary orbit, wherein the earth station comprises an antenna having an elongate beam shape, and wherein in operation, an axis of elongation of the beam shape is orientated to cross the line of geostationary orbit positions.

In one embodiment, communication is carried out only when the satellite is at a predetermined portion of its path. If the portion is away from the intersections with the equatorial plane, then interference with satellites in that plane will be reduced. If the portion is away from the intersections with the planes of other satellites at the same longitude but with orbits tilted in different directions, interference with such satellites can be reduced.

Preferably the antenna has an elongate beam shaped to match at least a portion of the satellite path. Viewed from a point on the earth's surface, the satellite will appear to move up and down in oscillatory fashion in the sky, centred around the position in the sky of a satellite in geostationary orbit above the equator. An elongate beam shape can thus avoid the need for expensive antenna motion control, or make such control simpler and cheaper. Simpler electronic steering of the antenna beam could also be used, either with or without mechanical steering, and either instead of, or in combination with an elongate beam shape.

Preferably a plurality of satellites are provided, each having substantially circular orbits, inclined to the equatorial plane, and having periods matching the earth's rotation, wherein the orbits intersect the equatorial plane at substantially the same points of longitude and the satellites pass through the equatorial plane at mutually different times.

Substantial inclination of the orbit (eg >5°) could also be advantageous in bringing a satellite into view from northerly or southerly latitudes at orbital positions in which a normal geosynchronous orbit would render them either invisible or at a low inclination to the horizon. This would allow use for communication can be carried out during periods of visibility when the apparent inclination is relatively high.

Small and very small aperture terminals could be easily steered either mechanically or electronically. Since the apparent movement of the satellite is substantially linear and has a 24 hour period of oscillation, a very simple clock drive mechanism could easily be used in the simplest implementation and a very simple two, three or multiple position electronic steering system would be easy to implement using conventional techniques and need not be described further.

Such preferred features may be combined as appropriate, as would be apparent to a man skilled in the art, and may be combined with any of the aspects of the invention.

### Brief Description of the Drawings

For a better understanding of the invention, and to show how the same may be carried into effect, it will now be described by way of example, with reference to the drawings, in which:-
Figure 1 shows a conventional geostationary orbit;
Figure 2 shows an embodiment of the invention in schematic form;
Figure 3 shows an embodiment of the invention in schematic form, viewed from earth;
Figure 4 shows an embodiment of the invention in schematic form, viewed from earth;
Figure 5 shows orbits of the invention; and
Figures 6a and 6b show orbits of the invention.

### Detailed Description

Figure 2 shows an orbit according to the invention. It will be referred to as a pseudo-geostationary orbit (PGEO).

Satellites are placed in orbits having a period of 24-hours. The orbits are inclined to the equatorial plane, optimally at relatively small angles of inclination. Satellites may be placed along such an orbit in slots just as in conventional geosynchronous orbits.

Starting from any given initial orbit position further similar orbits round the full 360° may be used.

In such orbits, from the viewpoint of an earth observer, the satellite will move :
(1) synchronously ie in 24 hour orbit from the point on the earth's surface, at virtually constant azimuth, but varying elevation; and
(2) if the orbit is slightly elliptical, it will move perpendicular to the ecliptic on a very narrow figure of 8, eg for 3° inclination there will be a figure of 8 having a ratio of approximately 0.3% width to length, over an apparent angle of approximately twice the angle of inclination of the orbital plane to the ecliptic. An elliptical orbit will give variations in orbital velocity, according to how high above the earth is the satellite at any time. This leads to a figure of 8 path in the sky, of large aspect ratio, typically 0.3% for a 3° off - equatorial system).

Typically, signals from satellites are linearly or circularly polarised. Thus two signals from the same part of the sky may be distinguished.

From the viewpoint of an earth observer the example satellite may appear to cross the orbit of a geostationary (GEO) satellite so, preferably, if similar frequency channels are used, different polarisation should be used, or orbital positions round the earth chosen to minimise interference.

### Population of all multiple orbits at similar longitudes

The satellite control methods as described in GB 2 288 038 would enable multiple P-GEO orbits having differing right ascensions of the ascending node, to be populated at the same longitude. Proximity at crossing points would need to be controlled. Appropriate antenna designs to optimise reception could be implemented.

On board steering of the spot and broad beams of the satellite antennas might be marginally more complex than for a simple GEO system. However, it is well known how to achieve suitable steering for non GEO satellites. As the longitude remains approximately constant for PGEO orbits, the steering may be simpler than that required for a non GEO orbit.

One possible system uses a number of satellites at the same or nearly the same longitudes. If the right ascensions of the ascending node are suitably staggered, and if the inclinations are sufficiently large, eg 6° or more then it becomes possible to arrange that there is always at least one satellite at least 3° or so away from the equatorial plane. This means there can be continuous communication using an aerial on the ground which is aimed at least 3° or so above geostationary satellites.

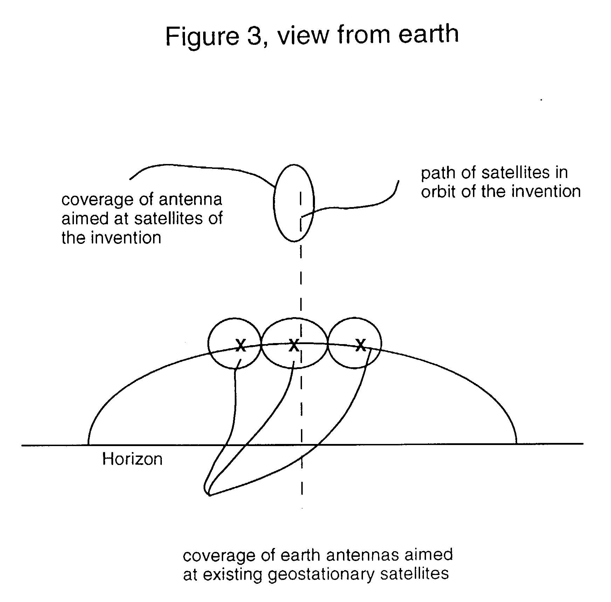

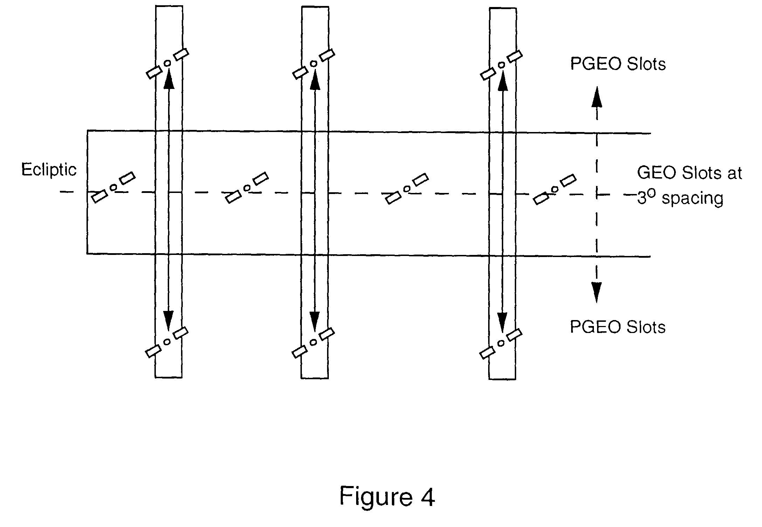

This can be arranged to occur for the entire 24 hour period, or just a proportion of the period, eg during peak communicating hours, or peak viewing hours for television applications. As a result, effectively new geostationary slots can be achieved without interference from existing slots. The new slots appear higher in the sky than conventional geostationary orbits, for northern latitudes. This gives improved coverage for latitudes away from the equator, or increases the longitude offset of the coverage for latitudes nearer the equator. Figure 3 shows a view from an earth station away from the equator illustrating such a system. An alternative system is shown in figure 4, viewed from the equator.

Many orbits of this type exist - eg for 10° spacing of the right ascension of the ascending node, there would be 36. All could be populated with satellites at the same longitude, though each would pass by the others, and so some physical separation would be required, eg by making the orbits elliptical with differing axes, or by using small longitudinal variations.

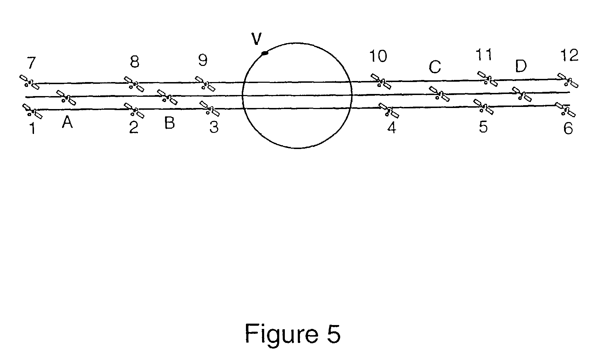

Figure 5 illustrates typical constellations in GEO and PGEO orbits. In figure 4, orbits A, B, C, D are conventional geo orbits
orbits 1, 2, 3, 4, 5, 6 are at X degrees south and
orbits 7, 8, 9, 10, 1 1 and 12 are at X degrees N

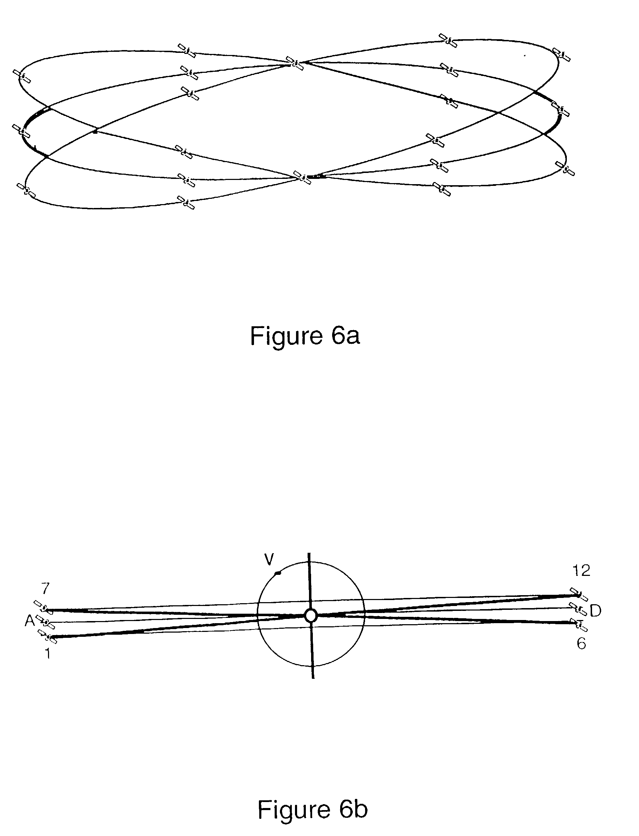

From viewpoint V satellites 1 to 12 would appear to move approximately +/- 2X degrees on a line perpendicular to the ecliptic. Note the satellites are shown at one point on their orbit - the lines do not represent their orbits except for the GEOs. Selecting out three satellites at +/- X degrees, figures 6a and 6b show the orbital paths. Preferably each orbit should be separated at the potential crossing point by a fraction of a degree of longitude to avoid spatial problems.

### Antenna Systems

It is clearly possible to track any satellite by using a fully steerable antenna system; with a narrow beam high power uplink this is usually preferred, but it is costly.

Satellites in these orbits can easily be received on simple antennas by alternate beam pattern design, now possible with today's antenna design knowledge.

In one system for broadcast or telecommunications, in the UK by way of an example an antenna with a beam pattern of 10 by 1 degrees could be used instead of 3 by 3, thus having a similar overall area but a different shape. Similarly beam antennas of the flat plate type could be used - these might typically be rectangular of ratio 4 to 1 instead of diamond in shape.

A flat plate array antenna allows the relative beamwidth in azimuth and elevation to be controlled by the antenna dimensions in the two principal planes. The Fourier transform relationship between aperture dimension and beamwidth implies a large dimension in azimuth and a short dimension in elevation to give a narrow beam in azimuth and a wide beam in elevation. How to construct such antennas is well known for purposes other than satellite communications and will not be described further.

It will be apparent that the use of an elongate beam shape can give some of the advantages described above, even if used with a geostationary orbit. Compared with a circular shaped beam, for an equivalent size of reflector, using an elongate beam, orientated across the line of geostationary orbits, preferably substantially perpendicularly, less spacing will be required between satellites using interfering frequencies.

A parabolic reflector antenna with a circular beam can be steered through several beamwidths be feed displacement from the focus. This allows switched feed multiple beams or scanning be mechanical feed movement; these allow simple and inexpensive elevation beam steering. Beam steering by up to ten beamwidths can also be achieved by various "limited sector scan" techniques, for example a parabolic reflector with a feed array and a beam forming network, or a shaped dual reflector arrangement. These and other conventional techniques for implementing relatively inexpensive steerable beams are well known, and reference can be made to standard texts, such as Chapter 5 entitled "hybrid antennas" by R J Mailloux, of "The Handbook of Antenna Design", Ed. A W Rudge et al 1982 published by Peter Peregrinus, London.

The beam of a paraboloid could be easily steered electronically over 2 beam widths (eg by using 4 feeds instead of one and remaining on signal strength peak - an easy and cheap solution).

### Satellite Position Control

Satellite position control to ensure each satellite remains in its predetermined hold range, and to ensure collisions are avoided, is often based on distance measurement data, and rate of change of distance from the earth station. Based on the distance measurement data, orbit determination values representing the position and velocity of the satellite at a certain time are computed. The orbit determination values may include six orbital elements, ie, the semimajor axis a of the elliptic orbit, the eccentricity e, the orbit inclination angle i which is the angle between the orbital plane and the equatorial plane, the right ascension Ω of the ascending node of the orbital plane measured eastward from the vernal equinox along the equatorial plane, the perigee argument ω indicating the orientation of the orbit, and the mean anomaly M. Rates of change in the orbital elements are used to determine whether any satellite is likely to deviate from the predetermined hold range. If it is predicted that a satellite will deviate from the predetermined hold range, action can be initiated to avoid such deviation, eg by variation of the set eccentricity vector of the satellite away from the optimum value.

### Conclusions

A new class of pseudo-geosynchronous orbits, 24 hour circular just as GEO, but inclined to the equator at various angles in both elevation and azimuth is provided.

This new class of orbits may be populated or partially populated by broadcast or telecommunications satellites.

These orbits in use combined with shaped beam antennas for transmission and/or reception can give essentially uniform gain along the apparent path of movement of a p-geo satellite in azimuth and/or elevation.

The shaped beam antennas can overcome some of the problems even with geostationary orbits.

These satellites in orbit can be tracked with antennas steered by mechanical or electrical means - steering electronically within 2 beam widths does not require change in paraboloid shape. Peak signal detection allows simple feed steering either mechanically or by using a line of feeders and switching between them.

Other variants will be apparent to a man skilled in the art within the scope of the claims.

## Claims

1. A method of operating a satellite comprising the steps of maintaining it in orbit around the earth, and using it to relay information, wherein the orbit is substantially circular, is inclined to the equatorial plane, and has a period matching the earth's rotational period.

2. A method of transmitting information from an earth station to a satellite for relaying the information to another earth station, wherein the satellite is in an orbit which is substantially circular, and inclined to the equatorial plane and has a period matching the earth's rotational period.

3. The method of claim 2 wherein the information is relayed by a plurality of satellites, each having substantially circular orbits, inclined to the equatorial plane, and having periods matching the earth's rotation, wherein the orbits intersect the equatorial plane at substantially the same points of longitude and the satellites pass through the equatorial plane at mutually different times.

4. A system for relaying information between a satellite in orbit around the earth, and an earth station, wherein the satellite orbit is:
a) substantially circular;
b) inclined to the equatorial plane; and
c) has a period matching the earth's rotational period; and
wherein the earth station comprises an antenna operable over a wider angle in elevation than in azimuth.

5. The system of claim 4 wherein communication is carried out only when the satellite is at a predetermined portion of its path.

6. The system of claim 4 or 5 wherein the antenna has an elongate beam shape, to match at least a portion of the satellite path.

7. The system of any of claims 4 to 6 wherein the antenna has a steerable beam to follow the satellite movement, along at least a portion of its path.

8. A system for relaying information between a satellite in orbit around the earth, and an earth station, wherein the satellite orbit is:
a) substantially circular;
b) inclined to the equatorial plane and
c) has a period matching the earth's rotational period; and
wherein the system is arranged to relay information only when the satellite is at a predetermined portion of its path.

9. The system of claim 8 wherein the predetermined portion is a portion where the satellite is overhead points on the earth at least 1 degree of latitude away from the equator.

10. The system of claim 8 or 9 wherein a plurality of satellites are provided, each having substantially circular orbits, inclined to the equatorial plane, and having periods matching the earth's rotation, wherein the orbits intersect the equatorial plane at substantially the same points of longitude and the satellites pass through the equatorial plane at mutually different times.

11. A system for transmitting information between a satellite and an earth station, wherein the satellite is in a geostationary orbit, wherein the earth station comprises an antenna having an elongate beam shape, and wherein in operation, an axis of elongation of the beam shape is orientated to cross the line of geostationary orbit positions.
